# EUROPEAN PATENT APPLICATION

(11) **EP 1 308 869 A2**
(43) Date of publication of application: **07.05.2003**
(21) Application number: 02256942.0
(22) Date of filing: 08.10.2002
(51) Int. Cl.: G06F 17/60

(54) **Method and device for determining optimum packaging**

(30) Priority: 30.10.2001 JP 2001332589
(71) Applicant: HONDA GIKEN KOGYO KABUSHIKI KAISHA, Minato-ku Tokyo (JP)
(72) Inventor: Kiyohara, Nobuyoshi, c/o Honda Giken Kogyo K. K., Tokyo (JP); Arai, Makoto, c/o Honda Giken Kogyo K. K., Tokyo (JP); Kuroda, Yoshinori, c/o Honda Giken Kogyo K. K., Tokyo (JP); Iwai, Yoshihei, c/o Honda Giken Kogyo K. K., Tokyo (JP); Koyama, Tatsuo, c/o Honda Giken Kogyo K. K., Tokyo (JP); Takahashi, Hidekazu, c/o Honda Giken Kogyo K. K., Tokyo (JP)
(74) Representative: Cheyne, John Robert Alexander Mackenzie

(57) **Abstract**

In a method and a device enabling any operator even without skill to efficiently, constantly determine an optimum packaging specification of vehicle parts, or the like, various factors possibly damaging articles are presets as protective properties, and at least one of the protective properties is determined for a particular article based on its surface materials, longest size of its dimensions and its weight. Based on the protective property determined, at least one of packaging materials classified in property is determined for packaging the article, then a packaging form is determined from the determined packaging material and the article property, and a packaging order of the determined packaging form is determined according to packaging priorities preset for such packaging forms.

## Description

### BACKGROUND OF THE INVENTION

### Field of the Invention

This invention relates to a method and a device for determining an optimum packaging specification of parts such as vehicle parts.

### Description of the Related Art

Packaging of parts are required to hold qualities of the parts for a predetermined period including the period of transportation and to package them as compactly as possible. There is a high level of difficulty in the work of determining how specific articles should be packaged taking those requirements into consideration.

For example, in case of vehicle parts, it is the general cognition that 43 items of seven classes regarding relations between properties of articles and their packaging form must be reviewed for determining an optimum packaging specification of a particular parts model.

That is, there are seven classes of properties of parts, namely, where in vehicles they are used, how they were manufactured, their materials, sizes, weights, relations between sizes of parts and their packing forms, and relations between weights of parts and their packing forms. Each class includes at least three items, and there are 43 items in total.

It is a heavy work to review all these 43 items of seven classes, and heretofore, this kind of work relied on skilled persons in charge of products distribution having great store of knowledge and experiences.

As such, the work of determining a packaging specification of articles is not standardized, and it takes much time even for skilled workers. Therefore, the conventional manner of pursuing this work is inefficient and the specification for a particular article may vary from time to time or from worker to worker.

It is therefore an object of the invention to provide a method and equipment for determining an optimum packaging specification, with which even a not-skilled worker can efficiently, more constantly determine an optimum packaging specification of a particular article.

### SUMMARY OF THE INVENTION

To attain the object, the invention provides a method of determining an optimum packaging specification comprising: presetting possible factors damaging articles as a number of protective properties; determining at least one of the protective properties of a particular article based on data about a surface material of the particular article, the longest size of the dimensions thereof and the weight thereof; determining at least one of packaging materials classified in property according to said protective property determined; determining packaging forms related to the determined packaging material and the properties of said article; presetting packaging priorities of packaging forms; and determining the packaging order of the packaging forms determined for the article according to the preset packaging priorities.

With this method, once three kinds of properties of an article, namely, its surface material, longest size of its dimensions and its weight, are input, the optimum packaging form of the article and the packaging sequence are determined substantially automatically. Therefore, even a not-skilled worker can constantly, efficiently determine the optimum packaging specification for the article.

Furthermore, to attain the object, the invention provides a method of determining an optimum packaging specification comprising: presetting possible factors damaging articles as a number of protective properties; determining at least one of the protective properties of a particular article based on data about a surface material of the particular article, the longest size of the dimensions thereof and the weight thereof; determining at least one of packaging materials classified in property according to said protective property determined; determining a bag or a box as an intermediate packaging form for the determined packaging material; determining a final packaging form which is a bag form specifying a particular material related to properties of a particular article if the intermediate packaging form is determined to be a bag; determining a final packaging form which is a box form specifying a particular material related to the longest size of the dimensions of the particular article and the weight thereof if the intermediate packaging form is determined to be a box; presetting packaging priorities of packaging forms; and determining the packaging order of the final packaging forms determined for the article according to the preset packaging priorities.

With this method, once three kinds of properties of an article, namely, its surface material, longest size of its dimensions and its weight, are input, one or more protection properties and one or more property packaging materials are determined sequentially, and the final packaging form and the packaging sequence are determined from the property packaging materials through an intermediate packaging form. Therefore, even a not-skilled worker can constantly, efficiently determine the optimum packaging specification of the article.

In any of the above-summarized methods for determining an optimum packaging specification, relationship between surface materials of articles and protection properties required for them are preset; relationship between groups of longest sizes of articles' dimensions and protection properties required for them are preset; and relationship between different groups in weight of articles and protection properties required for them are preset. Thus the protection property of a particular article can be determined from its surface material, longest size of its dimensions, and weight with reference to those relationships.

As such, by presetting three sorts of relationships, the protection property of a particular article can be readily determined from its surface material, longest size of its dimensions, and weight with reference to those relationships.

In any of the above-summarized methods for determining an optimum packaging specification, relationship between respective packaging materials and protective properties those materials can provide are preset, and at least one of the packaging materials for packaging a particular article can be determined from its determined protective property with reference to the preset relationship.

As such, by presetting the relationship between respective packaging materials and protective properties, at least one of the packaging materials for packaging a particular article can be readily determined from the determined protective property with reference to the relationship.

According to a further aspect of the invention, there is provided a device for determining an optimum packaging specification comprising:
first storage means (M1) which stores a preset relation of possible factors damaging articles as protective properties with surface materials of articles, the longest sizes of the dimensions thereof and weights thereof; second storage means (M2) which stores a preset relation between respective packaging materials classified in property and protective properties protectable by the packaging materials; third storage means (M3) which stores a preset relation of the respective packaging materials with the form of bags or boxes as intermediate packaging forms; fourth storage means (M4) which stores a preset relation of final packaging forms with the article properties; fifth storage means (M3) which stores a preset relation of packaging priorities of the final packaging forms; protective property determining means (D1) which determines particular protective properties of a particular article among the article properties according to the relation stored in the first storage means (M1); packaging material determining means (D2) which determines at least one of packaging materials related to the determined protective properties for packaging the particular article according to the relation stored in the second storage means (M2); intermediate packaging form determining means (D3) which determines an intermediate packaging form related to the determined packaging materials according to the relation stored in the third storage means (M3); final packaging form determining means (D4) which determines the final packaging form related to the determined intermediate packaging form and properties of the particular article according to the relation stored in the fourth storage means (M4); and packaging order determining means which determines the packaging order of the final determined packaging form according to the packaging priorities stored in the fifth storage means (M3).

With this method, once properties of an article, namely, its surface material, maximum length of its dimensions and its weight, are input, the protective property determining means determines the protective property of a particular article with reference to the relationships stored in the first storage means, the material determining means determines at least one packaging material for packaging the article with reference to the relation stored in the second storage means, the intermediate packaging form determining means determines from the packaging material with reference to the relationship stored in the third storage means, the final packaging form determining means determines the final packaging form from the intermediate packaging form and the property of the article with reference to the relationship stored in the fourth storage means, and the packaging order determining means determines the packaging order of the final packaging form from the final packaging form with reference to the packaging priority order stored in the fifth storage means.

Therefore, the final packaging form and the its packaging order are automatically determined by operator's easy work of inputting properties of a particular article, namely, its surface material, longest size of its dimensions and its weight. Thus any operator even without skill can efficiently, constantly select the optimum packaging specification of a particular article surface material.

In the optimum packaging specification determining device, the second storage means may contain storage about five kinds of packaging materials, namely, antirust material, conductive material, oil-resistant/gastight material, dustproof/waterproof/air-permeable material, cushioning material.

These five kinds of packaging materials, namely, antirust material, conductive material, oil-resistant/gastight material, dustproof/waterproof/air-permeable material, cushioning material, can cope with all necessary protective properties.

### BRIEF DESCRIPTION OF THE DRAWINGS

Fig. 1 is a diagram roughly showing configuration of a personal computer according to an embodiment of the invention;
Fig. 2 is a block diagram showing functions of the control system of the same computer;
Fig. 3 is a diagram showing a relation table M1 between article properties and protective properties;
Fig. 4 is a diagram showing a relation table M2 between packaging materials and protective properties;
Fig. 5 is a diagram packaging priority map M3 of packaging materials, intermediate packaging forms and final packaging forms;
Fig. 6 is a diagram showing a relation map of article properties and final packaging forms; and
Figs. 7(1) through Fig. 7(5-3) are diagrams showing different kinds of packaging forms.

### DETAILED DESCRIPTION OF THE PREFERRED EMBODIMENTS

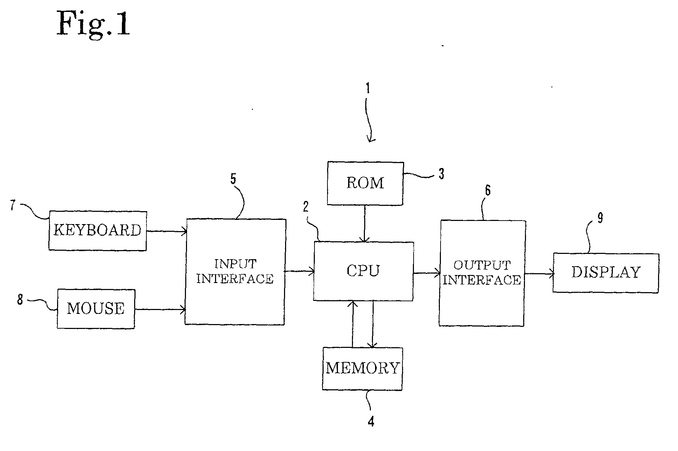

An embodiment of the invention will now be explained below with reference to Figs. 1 through 7.

The embodiment shown here uses a personal computer 1 as the optimum packaging specification determining device. As shown in Fig. 1, the personal computer 1 includes a central control unit (CPU) 2 that executes arithmetic and control processing according to a program stored in ROM 3.

Memory 4 stores various kinds of preset data. Referring to the data, CPU 2 processes data input from a keyboard 7 and a mouse 8 via an input interface 5, and outputs the result of the processing to a display 9 through an output interface 6.

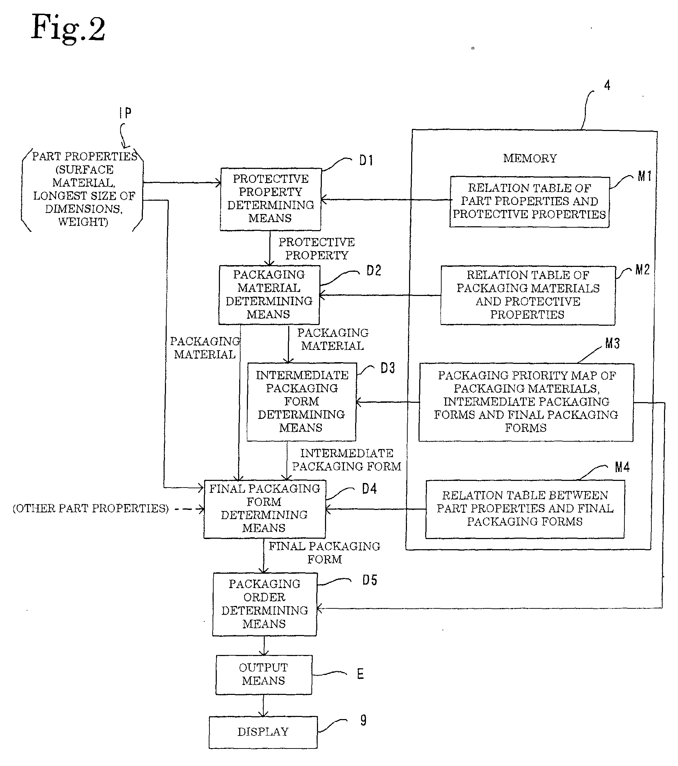

The embodiment is directed to determining an optimum packaging specification of vehicle parts, and Fig. 2 shows a functional block diagram of a control system by the personal computer 1.

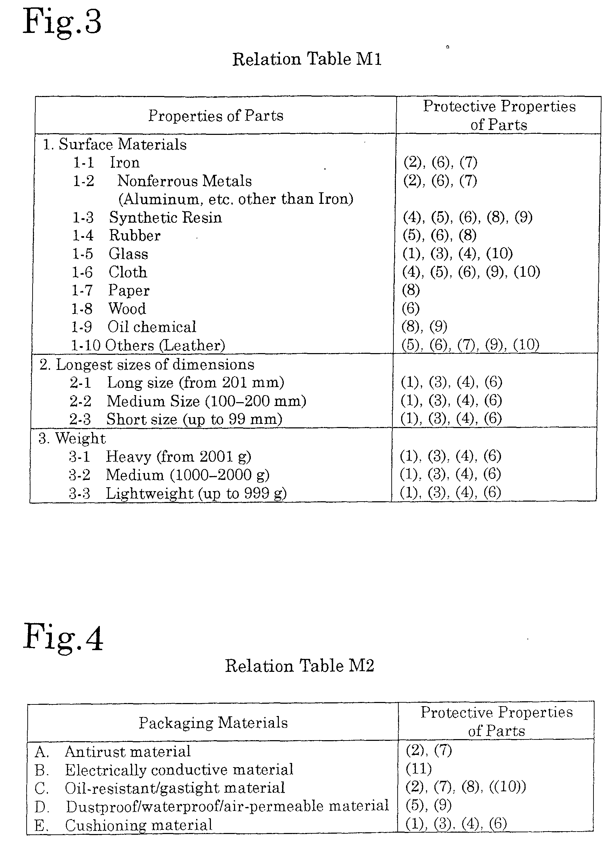

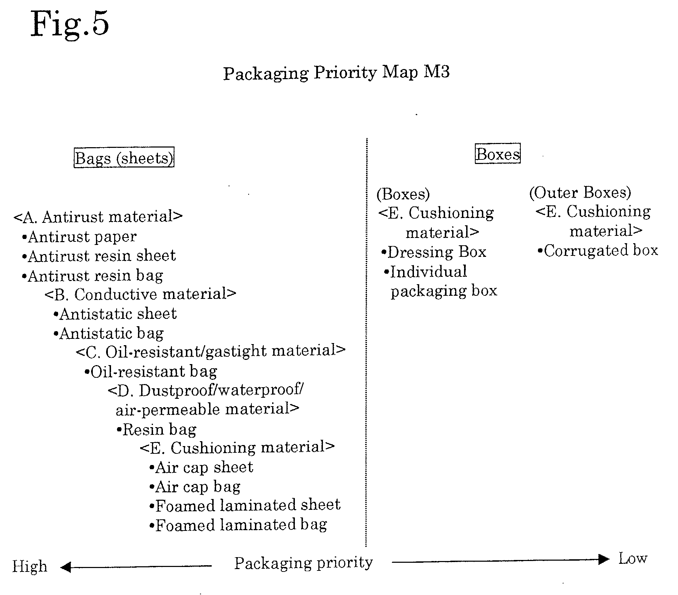

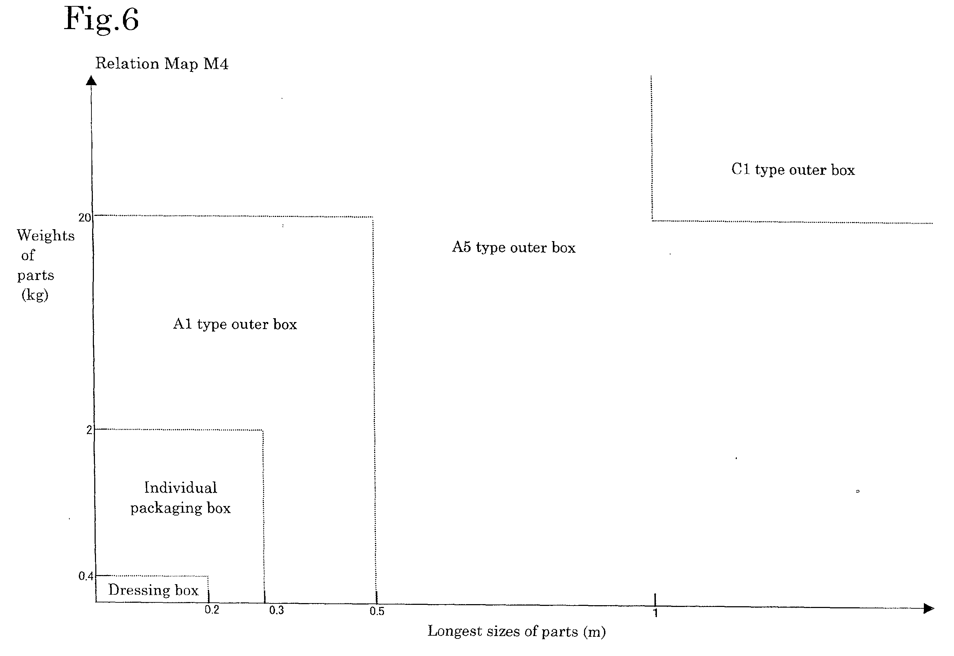

The memory 4 stores a relation table M1 between properties of predetermined vehicle parts and their protective properties (see Fig. 3), relation table M2 between packaging materials and the protective properties (see Fig. 4), Packaging priority map M3 among the packaging materials, intermediate packaging forms and final packaging forms (see Fig. 5), and relation map M4 between properties of the vehicle parts and their final packaging forms (see Fig. 6).

The protective properties herein indicate factors that may damage the parts, and they are classified to 11 groups of protective properties, namely, (1) vibrations, (2) rust, (3) shocks, (4) breakage (cracking or fragmentation), (5) change in color, (6) deformation (bending, twisting or depression), (7) corrosion, (8) deterioration (light, heat, air or time), (9) dust, (10) retrogressivity (the nature of returning to an original source material due to gradual lost of chemicals, for example, mixed to the original source material in the manufacturing process), and (11) others (magnetism and static electricity).

Numeral in parentheses indicating protective properties are used in the relation tables M1 and M2 explained later.

Properties of the parts are herein limited to three categories of properties, namely, surface materials, longest sizes of their dimensions, and their weights. Details of the respective property categories of the parts are shown in the relation table M1 of Fig. 3 for properties of parts and their protective properties.

The relation table of Fig. 3 shows, in the left column, details of surface materials of parts, three ranges of longest sizes of the parts' dimensions, namely, long size (201 mm or longer), medium size (100 to 200 mm) and short size (99 mm or shorter), and three ranges of weights, namely, heavy weight (2001 g or more), medium weight (1000 to 2000 g) and light weight (999 g or less).

The relation table M1 show, in its right column, corresponding ones of the protective properties in association with respective concrete parts' properties in numbers in parentheses, such as (1), (2), et seq.

For example, in case the surface material of a part is iron (1-1), (2) rust, (6) deformation and (7) corrosion are associated as protective properties thereof.

Although the longest sizes of parts' dimensions and their weights are herein classified to three ranges, corresponding protective properties of vehicle parts are four kinds of protective properties, namely, (1) vibrations, (3) shocks, (4) breakage and (6) deformation, in all of the ranges.

The relation table M2 between packaging materials and protective properties lists up packaging materials in the left column and corresponding protective properties in the right column as shown in Fig. 4.

The packaging materials are grouped for their special functions, and they are divided to five groups, A (antirust materials), B (electrically conductive materials), C (oil-resistant/gastight materials), D (dustproof/waterproof/air-permeable materials), and E (cushioning materials).

For example, antirust materials (A) as one sort of the packaging materials can cope with the protective properties (2) (rust) and (7) (corrosion). Electrically conductive materials (B) as another sort of the packaging materials can cope with the protective property (11) (others: magnetism, static electricity).

The packaging priority map M3 of packaging materials, intermediate packaging forms and final packaging forms is a map in which, as shown in Fig. 5, packaging materials, intermediate packaging forms are arranged in the order of packaging priorities. Intermediate packaging forms include packaging forms using bags or boxes, and bags include wrapping by sheets as well.

Antirust materials (A), conductive materials (B), oil-resistant/gastight materials (C) and dustproof/waterproof/air-permeable materials (D) other than cushioning materials (E) are used in form of bags (or sheets) as intermediate packaging forms, while cushioning materials (E) may be used in form of bags (sheets) or boxes.

Therefore, the packaging priority map M3 is used also when an intermediate packaging form is roughly determined from specific packaging materials.

The final packaging forms are finally determined packaging forms specifying particular packaging materials. The packaging priority map M3 of Fig. 5 shows that at least one final packaging form is defined for each packaging material.

As shown in Fig. 5, packaging priorities degrade sequentially from antirust materials (A) to conductive materials (B), oil-resistant/gastight materials (C), dustproof/waterproof/air-permeable materials (D) and cushioning materials (E). In regard to the cushioning materials (E), packaging priorities sequentially degrade from bags (sheets) to boxes, and priorities of boxes degrade from dressing/individual packaging boxes to corrugated boxes.

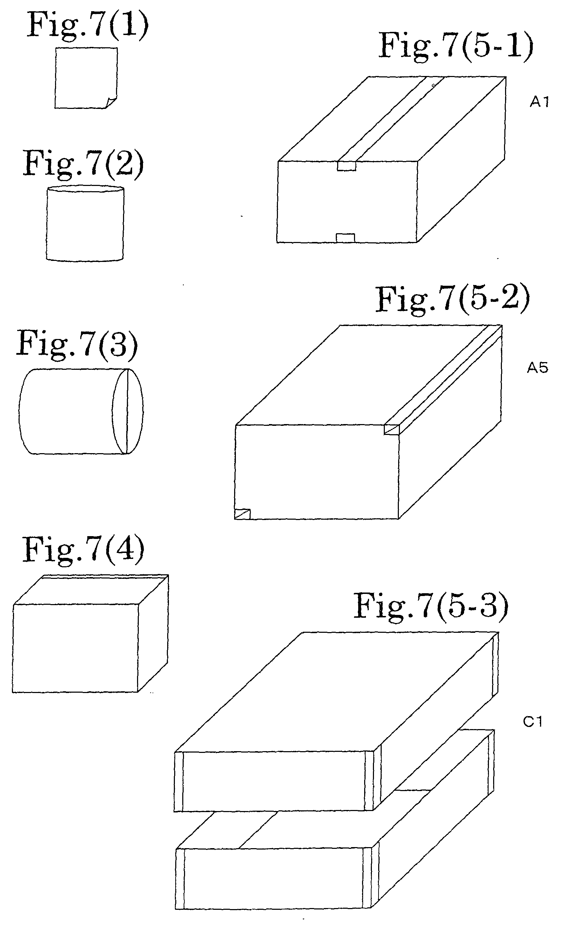

Various packaging forms are shown in Figs. 7(1) through 7(5-3).

The packaging form shown in Fig. 7(1) is a sheet for wrapping a part. There are various such sheets of various materials. The packaging form shown in Fig. 7(2) is a bag for containing a part. There are various such bags of various materials. The packaging form shown in Fig. 7(3) is a dressing box for mainly containing a small part. The packaging form shown in Fig. 7(4) is an individual packaging box for containing a small to medium part.

The packaging forms shown in Figs. 7(5-1) through 75-3) are outer packaging boxes (corrugated boxes) for containing medium to large parts. There are three types, A1, A5 and C1, for different sizes and weights of parts. Those packaging forms substantially increase in size from that of Fig. 7(1) to that of Fig. 7(5-3).

The relation map M4 between part properties and final packaging forms is used to determine final packaging forms in case intermediate packaging forms are boxes, and it is a coordinate map putting longest sizes of parts' dimensions on the abscissa and weights of articles on the ordinate among part properties as shown in Fig. 6.

Dressing boxes are used for smallest and most lightweight parts, individual packaging boxes are used for slightly larger and heavier parts, and outer packaging boxes are used still larger and heavier parts.

Among outer boxes, A1 type boxes are used for articles having longest sizes not larger than 0.5 m and weights not exceeding 20 kg; C1 type boxes are used for parts having longest sizes not smaller than 1 m and weights not smaller than 20 kg; and A5 type boxes are used for parts having the remainder longest sizes and weights.

The control system of the personal computer 1 having the memory 4 storing the relation tables M1, M2 and the maps M3, M4 includes five determining means, namely as designated by IP in Fig. 2, a protective property determining means D1, packaging material determining means D2, intermediate packaging form determining means D3, final packaging form determining means D4 and packaging order determining means D5.

The protective property determining means D1 determines protective properties of a particular part from input data, indicated at IP in Fig. 2, about its properties, i.e. its surface material, longest size of its dimensions and its weight, with reference to the relation table M1 (see Fig. 3) of part properties and protective properties.

Based on the determined protective properties, the packaging material determining means D2 determines one or more particular packaging materials from the relation table M2 (see Fig. 4) of the packaging materials and protective properties.

Based on the determined packaging materials, the intermediate packaging form determining means D3 determines an intermediate packaging form of a bag or a box with reference to the packaging priority map M3 (see Fig. 5) of packaging materials, intermediate packaging forms and final packaging forms.

If the determined intermediate packaging form is a bag, the final packaging form determining means D4 determines a final packaging form related to the determined packaging materials and article properties, which is prescribed in the packaging priority map M3 (see Fig. 5).

If the determined intermediate packaging form is a box, the packaging material is E. cushioning material. So the final packaging form for the longest size of the part's dimensions and its weight with reference to the relation map M4 (see Fig. 6) of part properties and final packaging forms.

The packaging order determining means D5 determines a final packaging form for the determined final packaging form with reference to the packaging priority map M3 (see Fig. 5).

The packaging specification specifying the final packaging form and the packaging order thus determined is demonstrated on the display 9 by an output means E.

Taking a specific example, the process of determining the optimum packaging specification according to the above control procedures is explained below. Here is taken a room mirror as a vehicle part.

Assume here that the room mirror includes a synthetic resin and glass as its surface materials, the longest size of its dimensions is 180 mm, and its weight is 500 g.

Once these properties of the room mirror are input into the personal computer 1 through the keyboard 7, the protective property determining means D1 verifies the input data with the relation table M1 of part properties and protective properties shown in Fig. 3, and determines from the synthetic resin in item 1-3 as its surface material being that protective properties of the room mirror are (4) breakage, (5) change in color, (6) deformation, (8) deterioration and (9) dust, and from the glass in item 1-5 as its surface material that protective properties are (1) vibrations, (3) shocks, (4) breakage and (10) retrogressivity.

Since the longest size of the room mirror is 180 mm, it is verified to be a medium size (100 to 200 mm) with reference to the relation table M1, (1) vibrations, (3) shocks, (4) breakage and (6) deformation are determined as its protective properties. Similarly, since its weight, too g, belongs to the light weight range (not heavier than 999 g), (1) vibrations, (3) shocks, (4) breakage and (6) deformation are determined as its protective properties.

Gathering those protective properties, (1) vibrations, (2) shocks, (4) breakage, (5) change in color, (6) deformation, (8) deterioration, (9) dust and (10) retrogressivity are determined. The packaging material determining means D2 verifies these protective properties with the relation table M2 of packaging materials and protective properties shown in Fig. 4, and determines specific packaging materials.

Since (1) vibrations, (2) shocks, (4) breakage, (5) change in color, (6) deformation, (8) deterioration, (9) dust and (10) retrogressivity have been determined as protective properties of the room mirror, a corresponding packaging material, namely, oil-resistant/gastight material (C) is selected from the relation table M2 for (8) deterioration and (10) retrogressivity; a dustproof/waterproof/air-permeable material (D) is selected for (5) change in color and (9) dust; and a cushioning material (E) is selected for (1) vibrations, (2) shocks, (4) breakage and (6) deformation.

That is, packaging material for packaging the room mirror is required to include an oil-resistant/gastight material (C), dustproof/waterproof/air-permeable material (D) and cushioning material (E).

After that, the intermediate packaging form determining means D3 determines whether the determined packaging materials should be a bag or box with as the intermediate packaging form with reference to the packaging priority map M3 of packaging materials, intermediate packaging forms and final packaging forms shown in Fig. 5.

The oil-resistant/gastight material (C) and the dustproof/waterproof/air-permeable material (D) are determined to take the form of bags. The cushioning material (E) may take the form of a bag or a box, and its final packaging form is determined by the final packaging form determining means D4.

As to the oil-resistant/gastight material (C) and the dustproof/waterproof/air-permeable material (D) determined to be bags (or sheets), the final packaging form determining means D4 determines an oil-resistant bag and a resin bag as their final packaging forms with reference to the packaging priority map M3 (see Fig. 5).

Some packaging materials may take different final packaging forms. In this case, however, one of packaging forms is employed, taking other article properties into account.

The final packaging form determining means D4 determines from other properties of the room mirror that the intermediate packaging form of the cushioning material should be a box, and determines the final packaging form with reference to the relation map between part properties and final packaging forms shown in Fig. 6.

Since the room mirror is 180 mm long in longest size and weighs 500 g, an individual packaging box is determined selected according to the coordinates on the relation map M4.

Therefore, the final packaging form of the room mirror includes an oil-resistant bag, resin bag and individual packaging box.

The packaging order determining means D5 verifies this final packaging form with the packaging priority map M3 of packaging materials, intermediate packaging forms and final packaging forms to determine the packaging order.

In the packaging priority map M3, the oil-resistant bag, resin bag and individual packaging box priorities in this order. Therefore, this packaging order is employed.

The final packaging form and packaging order determined for the room mirror are demonstrated on the display 9.

As such, once the operator may merely enter the article properties of he room mirror, such as its surface material, longest size of its dimensions and its weight, the personal computer 1 automatically processes them and demonstrates its optimum packaging specification specifying the oil-resistant bag, resin bag and individual packaging box in this packaging order. Therefore, the operator may package the room mirror sequentially in the oil-resistant bag, resin bag and individual packaging bag according to the instruction on the display 9.

As described above, since the optimum packaging specification specifying the optimum packaging form and order of a particular article are determined substantially automatically in response to operator's input of article properties including its surface material, longest size of its dimensions and its weight, any operator even without skill can efficiently, constantly determine the optimum packaging specification of the article.

## Claims

1. A method of determining an optimum packaging specification comprising:
presetting possible factors damaging articles as a number of protective properties;
determining at least one of the protective properties of a particular article based on data about a surface material of the particular article, the longest size of the dimensions thereof and the weight thereof;
determining at least one of packaging materials classified in property according to said protective property determined;
determining packaging forms related to the determined packaging material and the properties of said article;
presetting packaging priorities of packaging forms; and
determining the packaging order of the packaging forms determined for the article according to the preset packaging priorities.

2. A method of determining an optimum packaging specification according to claim 1 further comprising:
presetting a relation of the protective properties with surface materials of articles;
presetting a relation of protective properties with ranges of longest sizes of dimensions of articles; and
determining one or more of the protective properties of a particular article related to surface materials thereof, longest size of dimensions thereof and we9ight thereof according to said relations.

3. A method of determining an optimum packaging specification according to claim 1 further comprising:
presetting a relation between respective packaging materials and protective properties protectable by the packaging materials; and
determining at least one of the packaging materials for the protective properties of a particular article according to the preset relation.

4. A method of determining an optimum packaging specification comprising:
presetting possible factors damaging articles as a number of protective properties;
determining at least one of the protective properties of a particular article based on data about a surface material of the particular article, the longest size of the dimensions thereof and the weight thereof;
determining at least one of packaging materials classified in property according to said protective property determined;
determining a bag or a box as an intermediate packaging form for the determined packaging material;
determining a final packaging form which is a bag form specifying a particular material related to properties of a particular article if the intermediate packaging form is determined to be a bag;
determining a final packaging form which is a box form specifying a particular material related to the longest size of the dimensions of the particular article and the weight thereof if the intermediate packaging form is determined to be a box;
presetting packaging priorities of packaging forms; and
determining the packaging order of the final packaging forms determined for the article according to the preset packaging priorities.

5. A method of determining an optimum packaging specification according to claim 4 further comprising:
presetting a relation of the protective properties with surface materials of articles;
presetting a relation of protective properties with ranges of longest sizes of dimensions of articles; and
determining one or more of the protective properties of a particular article related to surface materials thereof, longest size of dimensions thereof and weight thereof according to said relations.

6. A method of determining an optimum packaging specification according to claim 1 further comprising:
presetting a relation between respective packaging materials and protective properties protectable by the packaging materials; and
determining at least one of the packaging materials for the protective properties of a particular article according to the preset relation.

7. A device for determining an optimum packaging specification comprising:
first storage means (M1) which stores a preset relation of possible factors damaging articles as protective properties with surface materials of articles, the longest sizes of the dimensions thereof and weights thereof;
second storage means (M2) which stores a preset relation between respective packaging materials classified in property and protective properties protectable by the packaging materials;
third storage means (M3) which stores a preset relation of the respective packaging materials with the form of bags or boxes as intermediate packaging forms;
fourth storage means (M4) which stores a preset relation of final packaging forms with the article properties;
fifth storage means (M3) which stores a preset relation of packaging priorities of the final packaging forms;
protective property determining means (D1) which determines particular protective properties of a particular article among the article properties according to the relation stored in the first storage means (M1);
packaging material determining means (D2) which determines at least one of packaging materials related to the determined protective properties for packaging the particular article according to the relation stored in the second storage means (M2);
intermediate packaging form determining means (D3) which determines an intermediate packaging form related to the determined packaging materials according to the relation stored in the third storage means (M3);
final packaging form determining means (D4) which determines the final packaging form related to the determined intermediate packaging form and properties of the particular article according to the relation stored in the fourth storage means (M4); and
packaging order determining means which determines the packaging order of the final determined packaging form according to the packaging priorities stored in the fifth storage means (M3).

8. A device for determining an optimum packaging specification according to claim 7 wherein said packaging materials classified in property in said second storage means (M2) are five types of packaging materials including antirust materials, electrically conductive materials, oil-resistant/gastight materials, dustproof/waterproof/air-permeable materials and cushioning materials.
